# EUROPÄISCHE PATENTSCHRIFT

(11) **EP 2 591 404 B1**
(45) Veröffentlichungstag und Bekanntmachung des Hinweises auf die Patenterteilung: **04.06.2014**
(21) Anmeldenummer: 11748253.9
(22) Anmeldetag: 30.06.2011
(51) Int. Cl.: G05B 19/05

(54) **VERFAHREN ZUR KONFIGURIERUNG EINER STEUERUNGSEINRICHTUNG**
METHOD FOR CONFIGURING A CONTROL DEVICE
PROCÉDÉ DE CONFIGURATION D'UN DISPOSITIF DE COMMANDE

(30) Priorität: 07.07.2010 DE 102010026494
(43) Veröffentlichungstag der Anmeldung: 15.05.2013
(73) Patentinhaber: ABB AG, 68309 Mannheim (DE)
(72) Erfinder: BLEI, Brigitte, 10405 Berlin (DE); STOLL, Jürgen, 68782 Brühl (DE); GAUB, Gernot, 68766 Hockenheim (DE)
(86) Internationale Anmeldenummer: PCT/EP2011/003224
(87) Internationale Veröffentlichungsnummer: WO 2012/003936

(56) Entgegenhaltungen:
- EP-A1- 2 042 952
- WO-A2-2007/149688
- DE-A1- 10 155 586

## Beschreibung

Die Erfindung betrifft ein Verfahren zur Konfigurierung einer Steuerungseinrichtung, nachfolgend auch als speicherprogrammierbare Steuerung oder SPS bezeichnet, in einem vorzugsweise modular aufgebautem, Steuerungs- oder Automatisierungssystem mit einer flexibel ausbaubaren Hardwarestruktur gemäß Anspruch 1. Weiterhin betrifft die Erfindung ein System zur Ausführung des Verfahrens. Die Erfindung findet insbesondere Verwendung in der Prozessautomation oder Maschinensteuerung zum Steuern von Prozessen und/oder Anlagenkomponenten.

Automatisierungssysteme zur Steuerung eines technischen Prozesses oder einer technischen Anlage umfassen üblicherweise eine Steuerungseinrichtung (SPS), welche über Kommunikationskoppler mit den Ein-/Ausgabeeinheiten und/oder Feldgeräten des Automatisierungssystems kommuniziert.

Bevor das Steuerungssystem einsatzfähig ist, wird die dafür vorgesehene Hardware in einem Programmierwerkzeug, auch Engineering- Tool genannt, als Bestandteil eines SPS- oder Steuerungsprojektes abgebildet. Im Steuerungsprojekt werden Informationen über Ein-/Ausgangs-Adressen dieser Hardware gespeichert und dem Anwenderprogramm zugänglich gemacht.

Damit die Ein- und Ausgänge der Hardware des Systems ansprechbar sind, müssen die Steuerungseinrichtung und die Ein-/Ausgabeeinheiten entsprechend den jeweiligen kundenspezifischen Anforderungen zunächst konfiguriert werden, was nachfolgend auch als Steuerungskonfiguration bezeichnet wird. Dies wird üblicherweise vom Programmierwerkzeug unterstützt. Mit der erstellten Steuerungskonfiguration wird die Verknüpfung der Hardware (beispielsweise Ein-/Ausgabeeinheiten, Kommunikationskoppler) des Automatisierungssystems untereinander abgebildet. Die Steuerungskonfiguration ist Bestandteil des SPS- oder Steuerungsprojektes und wird über eine im Engineering Tool integrierte Schnittstelle (beispielsweise mit dem von der Firma ABB verwendeten Control Builder AC500) in die Steuerungseinrichtung übertragen. Das vorab beschriebene Verfahren zur Konfiguration der Steuerungseinrichtung ist beispielsweise in der IEC 61131-3 beschrieben.

Die mittels der Steuerungskonfiguration bereitgestellte Abbildung der Hardware des Automatisierungssystems im Steuerungsprojekt umfasst unter anderem die folgenden Informationen:
- allgemeine Parameter der CPU der Steuerungseinrichtung des Systems,
- Anzahl der Ein-/Ausgabeeinheiten, welche über einen proprietären Ein-/ Ausgabebus bzw. über einen Feldbus an die Steuerungseinrichtung anzuschließen sind,
- Ein- und Ausgänge aller an den Bus angeschlossenen Einheiten
- Parametrierung der Ein-/Ausgabeeinheiten,
- Konfigurierung der Ein- und Ausgänge der Einheiten,
- Parametrierung der Ein-/Ausgabekanäle der Ein-/Ausgabeeinheiten,
- Einstellung der Betriebsart und der Parameter der seriellen Schnittstellen des Systems, und/oder
- Art, allgemeine Parameter und Protokolle der verwendeten Kommunikationskoppler bzw. des verwendeten Kommunikationsnetzwerkes.

Beim Hochfahren der SPS wird die zuvor projektierte und im Projekt abgelegte Steuerungskonfiguration mit der tatsächlich vorhandenen Hardware, beispielsweise die an die SPS angeschlossenen Ein-/Ausgabeeinheiten, verglichen, was auch als Verifikation bezeichnet wird. Weiterhin werden die Ein-/Ausgabeeinheiten entsprechend der Steuerungskonfiguration parametriert. Stimmt dabei die tatsächliche im System verwendete Hardware nicht mit der in der Steuerungskonfiguration projektierten Hardware überein, beispielsweise sind nicht alle projektierten Ein-/Ausgabeeinheiten des Automatisierungssystems angeschlossen, wird das Steuerungs- bzw. Anwenderprogramm der SPS nicht gestartet und gegebenenfalls eine Fehlermeldung generiert.

Die SPS wird somit nur gestartet, wenn alle im Automatisierungssystem vorgesehenen bzw. eingetragenen Geräte, wie Ein-/Ausgabeeinheiten und Kommunikationskoppler, angeschlossen und parametriert sind.

Werden in dem so konfigurierten Automatisierungssystem jedoch in einer weiteren kundenspezifischen Ausbaustufe einige Hardwaregeräte nicht benötigt, kann das Steuerungs- bzw. Anwenderprogramms der SPS nicht gestartet werden. Dann muss für diese kundenspezifische Ausbaustufe, die neben der Änderungen der Anzahl der Ein-/Ausgabeeinheiten, auch Änderungen bei der Parametrierung der Ein-/ Ausgabeeinheit, Änderungen bei der Parametrierung eines Kanals einer Ein-/Ausgabeeinheit oder den Austausch der Kommunikationskoppler betreffen, das Steuerungsprojekt gemäß den Kundenanforderungen angepasst und die Steuerungskonfiguration muss entsprechend geändert werden und neu in die SPS übertragen werden. In diesem Falle wird die Steuerungskonfiguration als nicht flexible oder starre Steuerkonfiguration bezeichnet.

Mittels der starren Steuerungskonfiguration ist es nicht möglich in einem einmal erstellten Steuerungsprojekt Modifikationen der Hardware, für beispielsweise nicht vorhandene Maschinenteile, abzudecken. Die Steuerungskonfiguration muss entsprechend des nunmehr geänderten Steuerungsprojektes im Engineering- Tool überarbeitet werden und nochmals in die Steuerungseinrichtung übertragen und ausgeführt werden.

Für Automatisierungssysteme mit einer flexibel ausbaubaren Steuerungs- und Kommunikationsstruktur, insbesondere in modular aufgebauten Steuerungssystemen, wie sie beispielsweise in der DE 10 2004 056 363 A1 beschrieben sind, ist eine Neukonfigurierung des Steuerungssystems mit einem nicht unerheblichen Aufwand an Zeit und Kosten verbunden.

In der WO 2007/149688 ist ein System und Verfahren zum Konfigurieren eines Automatisierungsnetzes unter Verwendung virtueller Platzhalter beschrieben.

Der Erfindung liegt demgemäß die Aufgabe zugrunde, ein Verfahren zur Konfigurierung einer Steuerungseinrichtung, in einem vorzugsweise modular aufgebautem, Steuerungs- oder Automatisierungssystem mit einer flexibel ausbaubaren Hardwarestruktur anzugeben, welches vorgenannte Nachteile vermeidet. Insbesondere soll das erfindungsgemäße Verfahren dafür geeignet sein, die Konfiguration der Steuerungseinrichtung flexibler und effektiver zu gestalten sowie die Inbetriebnahme des Steuerungs- bzw. Automatisierungssystems vereinfachen. Weiterhin betrifft die Erfindung ein System zur Ausführung des Verfahrens und findet Verwendung in der Prozessautomation oder Maschinensteuerung zum Steuern von Prozessen und/oder Anlagenkomponenten.

Die Aufgabe der Erfindung wird durch ein Verfahren zur Konfigurierung einer Steuerungseinrichtung der eingangs genannten Art mit den im Anspruch 1 angegebenen Merkmalen gelöst. Vorteilhafte Ausgestaltungen und Verbesserungen des erfindungsgemäßen Verfahrens sowie ein System zur Durchführung des Verfahrens sind in weiteren Ansprüchen und in der Beschreibung angegeben.

Gemäß dem erfindungsgemäßen Verfahren zur Konfigurierung einer Steuerungseinrichtung, nachfolgernd auch speicherprogrammierbaren Steuerung oder SPS genannt, in einem, vorzugsweise modular aufgebautem, Steuerungs- oder Automatisierungssystem mit einer flexibel ausbaubaren Hardwarestruktur wird ein Programmierwerkzeuges an die Steuerungseinrichtung angeschlossen, mittels dem während dem Hochfahren der Steuerungseinrichtung ein Anwender- bzw. Steuerungsprogramm und entsprechende Konfigurationsdateien in die Steuerungseinrichtung übertragen werden.

Weiterhin wird im Programmierwerkzeug in einem ersten Verfahrensschritt ein Steuerungsprojekt mit den vorgesehenen Hardwaregeräten des Automatisierungssystems als Bestandteil des Steuerungsprojektes und eine Verknüpfung der vorgesehenen Hardwaregeräte des Automatisierungssystems untereinander abgebildet. Das im Programmierwerkzeug abgelegte Steuerungsprojekt des Automatisierungssystems mit dem maximal möglichen Hardwareausbau des Automatisierungssystems und einer entsprechenden Parametrierung wird zur Steuerungseinrichtung des Automatisierungssystems übertragen und dort im Speicher der Steuereinrichtung abgelegt.

Die Parametrierung der Steuerungseinrichtung umfasst dabei auch die Einstellung der Systemparameter. Ein Systemparameter ist der Parameter "FlexControl". Dieser dient zur Einstellung der Steuerungseinrichtung auf den Modus "Steuerung mit flexibler Konfiguration" und eines Typs zur Übertragung von Änderungsinformationen in die Steuerungseinrichtung, was nachfolgend erläutert wird.

In einem zweiten Schritt werden im Programmierwerkzeug Modifikationen der vorgesehenen Hardwaregeräte, also Änderungen der im Automatisierungssystem verwendeten Hardware gegenüber dem maximal möglichen im Projekt abgelegten Hardwareausbau, mittels einer Änderungssoftware "FlexConf.ini" als Änderungsinformationen erfasst.

Die Änderungssoftware "FlexConf.ini" wird gemeinsam mit dem Steuerungsprojekt in die SPS geladen und im internen spannungssicheren Speicher, beispielsweise in einem Flash-Speicher, abgelegt.

Die Änderungssoftware, auch als File "FlexConf.ini" bezeichnet, besteht aus Datensätzen. Jeder Datensatz beginnt mit einer Datensatz-Anfangskennung, die beispielsweise als [Flex_Conf_ID_xxx] gekennzeichnet ist. Xxx ist dabei die Datensatznummer und variiert von "000" bis "255". Diese Datensatznummer wird nachfolgend FlexConf_ID genannt. Die Datensatznummer FlexConf_ID wird über geeignete Einstellmöglichkeiten, wie beispielsweise:
- über ein vorgesehenes Tastenfeld und Display an der SPS
- über eine serielle Datenübertragung,
- über eine Datenübertragung über ein Netzwerk, wie beispielsweise Ethernet oder ARCNET,
- über Eingangskombination der Onboard- Eingänge, d.h. direkt im Steuerungsgerät vorhandene Eingänge der SPS, oder
- über an der SPS vorgesehene Kodierschalter
direkt an die SPS übertragen. Der Übertragungstyp wird im Parameter "FlexControl" eingestellt.

In einer vorteilhaften Ausgestaltung kann auch ein Prüfprogramm durchlaufen werden, welches eine Überprüfung des Files "FlexConf.ini" auf syntaktische und formale Richtigkeit durchführt. Beispielsweise wird geprüft, ob der jeweilige die Änderungsinformationen enthaltene Datensatz im abgelegten Projekt des Automatisierungssystems vorhanden ist.

In einem nächsten Schritt wird die Steuerungseinrichtung durch Laden des Anwender- bzw. Steuerungsprogramms, der Konfigurationsdateien und der Änderungssoftware mit den darin enthaltenen Änderungsinformationen hochgefahren, wobei die übertragenen Konfigurationsdaten an die übertragenen Änderungsinformationen angepasst, Kopierlisten für Ein- und Ausgänge der verwendeten Hardware entsprechend den abgelegten Änderungsinformationen erstellt und eine Parametrierung der Hardware durchgeführt werden.

In einer besonderen Ausgestaltung des erfindungsgemäßen Verfahrens wird erst nach einer Prüfung durch die auf der SPS installierten Firmware auf vollständige Übernahme der Änderungsinformationen, beispielsweise dahingehend ob die in den Konfigurationsdateien verwendeten IEC- Adressen auch wirklich an der verwendeten Hardware existieren oder Adressenüberschneidungen vorliegen und einer nachfolgenden Parametrierung der Hardware des Automatisierungssystems, das Anwenderprogramm der Steuereinrichtung gestartet und die Steuerungseinrichtung in die Betriebsart "RUN" überführt.

Das File "FlexConf.ini", welches die Änderungssoftware für die Änderungsinformationen der Hardwarestruktur des Steuerungssystems gegenüber einem maximal möglichen Hardwareausbaus des Automatisierungssystems beinhaltet, wird vorzugsweise im Windows INI-Format oder XML- Format erstellt und ist ebenfalls Bestandteil des SPS- oder Steuerungsprojektes.

Nachfolgend sind verschiedene mittels des Parameter "FlexControl" einstellbare Übertragungstypen 1 bis 6 zum Laden der Hardwareänderungen gegenüber einem maximal möglichen Hardwareausbaus des Automatisierungssystems, also der Änderungsinformationen, aufgeführt, wobei auf die Änderungsinformationen beispielsweise aus dem Flash- Speicher der SPS, mittels einem Tastenfeld/Display an der SPS oder über ein Netzwerkprotokoll zugegriffen wird.

Ist im Parameter "FlexControl" der Übertragungstyp 1 eingestellt, wird in einer ersten Ausführungsform das File "FlexConf.ini", welches die Änderungssoftware enthält und im Speicher, vorzugsweise im Flash- Speicher oder anderem ausfallsicherem Speicher, der SPS abgelegt ist, in die Zentraleinheit der SPS geladen. Alternativ kann das "FlexConf.ini" auch bei der Übertragung des Steuerungsprojektes mit in die SPS übertragen werden. Die jeweilige FlexConf_ID mit den Änderungsinformationen wird über gespeicherte Einstellungen aus dem Tastenfeld bzw. Display der SPS bereitgestellt. Ist im Tastenfeld beispielsweise die FlexConf_ID auf 10 eingestellt, so wird der Datensatz [FlexConf_ID_10] aus dem File "FlexConf.ini" zum Ermitteln der Änderungen an der Steuerungskonfiguration herangezogen.

Ist im Parameter "FlexControl" der Übertragungstyp 2 eingestellt wird das File "Flex-Conf.ini", welches die Änderungssoftware enthält und vorzugsweise im Flash- Speicher, der SPS abgelegt ist, bei der Übertragung des Steuerungsprojektes in die Zentraleinheit der SPS geladen oder gemeinsam mit dem SPS-Projekt zur Zentraleinheit der SPS übertragen. Die FlexConf_ID wird über eine sogenannte Eingangskombination der Onboard- Eingänge, d.h. direkt im Steuerungsgerät vorhandene Eingänge, bereitgestellt. Ist die sogenannte Eingangskombination der Onboard- Eingänge beispielsweise die FlexConf_ID auf 10 eingestellt, so wird der Datensatz [Flex-Conf_ID_10] aus dem File "FlexConf.ini" zum Ermitteln der Änderungen an der Steuerungskonfiguration herangezogen.

Bei der Einstellung des Übertragungstyps 3 im Parameter "FlexControl" werden die im Speicher, vorzugsweise im Flash- Speicher, der SPS, abgelegten Änderungsinformationen bei der Übertragung des Steuerungsprojektes, beispielsweise im File "FlexConf.ini", gemeinsam mit dem SPS-Projekt bereitgestellt. Die FlexConf_ID wird über vorgesehene Kodierschalter der SPS übergeben. Sind die Kodierschalter beispielsweise auf die FlexConf_ID 10 eingestellt, so wird der Datensatz [FlexConf_ID_10] aus dem File "FIexConf.ini" zum Ermitteln der Änderungen an der Steuerungskonfiguration herangezogen.

Wird der Übertragungstyp 4 im Parameter "FlexControl" eingestellt und sind die Änderungsinformationen im Speicher, vorzugsweise im Flash- Speicher, der SPS, abgelegt, werden bei der Übertragung des Steuerungsprojektes, beispielsweise im File "FlexConf.ini", die Änderungsinformationen gemeinsam mit dem SPS-Projekt in die SPS übertragen. Es wird zuerst das Anwenderprogramm gestartet. Es werden aber noch keine Ein-/Ausgangsdaten ausgetauscht, da die Hardware noch nicht verifiziert und parametriert ist. Erst nach Empfang der FlexConf_ID im Anwenderprogramm wird die Hardware entsprechend den Änderungen verifiziert und parametriert sowie die Kopierlisten für die Ein-/Ausgangsdaten erstellt. Bei Erfolg wird der Ein-/Ausgangs-Datenaustausch gestartet.

Bei Einstellung des Übertragungstyps 5 im Parameter "FlexControl" werden die Änderungsinformationen als Datensätze zur Laufzeit des Anwenderprogramms im sogenanntem Runtime- Modus an die SPS übertragen.

Ist der Übertragungstyp 6 im Parameter "FlexControl" ausgewählt, werden die Änderungsinformationen im File "FlexConf.ini" per Netzwerkprotokoll z.B. FTP, Modbus, TCP, UDP an die SPS übertragen.

Das erfindungsgemäße modular aufgebautes Steuer- bzw. Automatisierungssystem zur Ausführung des erfindungsgemäßen Verfahrens umfasst eine Steuerungseinrichtung, die für die Steuerung von Prozessen und/oder Anlagenkomponenten vorgesehen ist, mit daran angeschlossenen Modulen der zentralen Eingabe-/ Ausgabeeinheiten, die über einen internen Ein- /Ausgabebus mit der ersten Steuereinheit verbunden sind, und optional mit Kommunikationskopplern, welche die Kommunikation über einen Feldbus mit einer Vielzahl von dezentralen Feldbus-Slaves und an denen angeschlossenen Eingabe-/Ausgabeeinheiten steuern.

An die Steuerungseinrichtung ist ein Programmierwerkzeug anschließbar, wobei mittels des Programmierwerkzeugs ein Anwender- bzw. Steuerungsprogramm, Konfigurationsdateien und eine Änderungssoftware mit den darin enthaltenen Änderungsinformationen in diese übertragbar sind. Im Programmierwerkzeug ist dazu ein Steuerungsprojekt abgelegt, welches die vorgesehenen Hardwaregeräte des Automatisierungssystems als Bestandteil des Steuerungsprojektes und eine Verknüpfung der vorgesehenen Hardwaregeräte des Automatisierungssystems untereinander abbildet.

Das Steuerungsprojekt wird nach dem Laden in die Steuerungseinrichtung spannungausfallsicher, beispielsweise im Flash der Steuerungseinrichtung, gespeichert. Beim Hochfahren der Steuerungseinrichtung wird das Steuerungsprojekt aus dem Flash gelesen und abgearbeitet.

Weiterhin sind im Programmierwerkzeug Modifikationen der vorgesehenen Hardwaregeräte, beispielsweise Änderungen der Anzahl und/oder des Typs der verwendeten Hardwaregeräte gegenüber dem maximal möglichen Ausbau der Hardwaregeräte des Automatisierungssystems, die im Steuerungsprojekt abgelegt sind, mittels der Änderungssoftware "FlexConf.ini" als Änderungsinformationen erfassbar.

Im Programmierwerkzeug ist eine Parametereinheit zur Einstellung der an das Programmierwerkzeug anschließbaren Steuerungseinrichtung auf den Modus " Steuerung mit flexibler Konfiguration" mittels eines Parameters "FlexControl vorgesehen, wobei im Parameter "FlexControl" ein Typ zur Übertragung von Änderungen in der Hardwarestruktur gegenüber dem maximal möglichen Hardwareausbau des Automatisierungssystems festgelegt ist.

Die Einstellung des Parameters "FlexControl" und des im Parameter abgelegten Übertragungstyps ist in einer ersten Ausführungsform über eine Einstellmöglichkeit an der Steuerungseinheit über ein vorgesehenes Tastenfeld und/oder Display an der SPS oder über an der SPS vorgesehene Kodierschalter ausführbar.

In einer vorteilhaften Ausführungsform ist das Steuerungsprojekt mit dem Parameter "FlexControl" mit dem festgelegten Übertragungstyp auch mittels einer seriellen Datenübertragung oder über ein im Automatisierungssystem vorhandenes Netzwerk, beispielsweise Ethernet oder ARCNET, in die SPS übertragbar.

Beim Hochfahren der Steuerungseinrichtung oder nach einem Anschluss des Programmierwerkzeuges an die Steuerungseinrichtung direkt oder über das Bussystem des Automatisierungssystems ist eine Übertragung der Änderungssoftware mit den darin abgelegten Änderungsinformationen gemäß dem zuvor im Parameter "FlexControl" eingestellten Übertragungstyp zur Steuerungseinrichtung durch Laden des Anwender- bzw. Steuerungsprogramms, der Konfigurationsdateien und der Änderungssoftware mit den darin enthaltenen Änderungsinformationen ausführbar. Dabei erfolgt eine Anpassung der übertragenen Konfigurationsdaten an die übertragenen Änderungsinformationen, eine Erstellung von Kopierlisten für Ein- und Ausgänge der verwendeten Hardwaregeräte entsprechend den abgelegten Änderungsinformationen, eine Parametrierung der Hardware und eine Überführung der Steuerungseinrichtung in die Betriebsart "RUN".

Im Anwenderprogramm der Steuerungseinrichtung sind spezielle Funktionsbausteine zum Empfang der Änderungsinformationen, der Änderungssoftware, beispielsweise als Files, der FlexConf_ID und des Status der Hardware-Konfiguration (Verifikation und Parametrierung der Hardware des Steuerungssystems) sowie des Ein-/Ausgangs-Datenaustausches abgelegt.

In einer vorteilhaften Ausgestaltung des erfindungsgemäßen Systems ist auch eine Prüfung auf vollständige Übernahme der Änderungsinformationen in die Konfigurationsdateien mittels eines Prüfmoduls vorgesehen.

Anhand der in den folgenden Figuren dargestellten Ausführungsbeispiele sollen die Erfindung sowie vorteilhafte Ausgestaltungen und Verbesserungen der Erfindung näher erläutert und beschrieben werden.

Es zeigen:
- **Fig. 1**: einen beispielhaften Ablauf des erfindungsgemäßen Verfahrens für ein Automatisierungssystem mit flexibler Steuerungskonfiguration,
- **Fig. 2**: einen beispielhaften Ablauf des erfindungsgemäßen Verfahrens, wobei die Übertragung der Änderungsinformationen gemäß einem Übertragungstyps 1 ausgeführt wird,
- **Fig. 3**: einen beispielhaften Ablauf des erfindungsgemäßen Verfahrens, wobei die Übertragung der Änderungsinformationen gemäß einem Übertragungstyps 2 ausgeführt wird,
- **Fig. 4**: einen beispielhaften Ablauf des erfindungsgemäßen Verfahrens, wobei die Übertragung der Änderungsinformationen gemäß einem Übertragungstyps 3 ausgeführt wird,
- **Fig. 5**: einen beispielhaften Ablauf des erfindungsgemäßen Verfahrens, wobei die Übertragung der Änderungsinformationen gemäß einem Übertragungstyps 4 ausgeführt wird,
- **Fig. 6**: einen beispielhaften Ablauf des erfindungsgemäßen Verfahrens, wobei die Übertragung der Änderungsinformationen gemäß einem Übertragungstyps 5 ausgeführt wird,
- **Fig. 7**: einen beispielhaften Ablauf des erfindungsgemäßen Verfahrens, wobei die Übertragung der Änderungsinformationen gemäß einem Übertragungstyps 6 ausgeführt wird,
- **Fig. 8**: ein Beispiel für ein modular aufgebautes Steuerungs- oder Automatisierungssystem, und
- **Fig. 9**: ein beispielhaft ausgebildetes System zur Ausführung des erfindungsgemäßen Verfahrens.

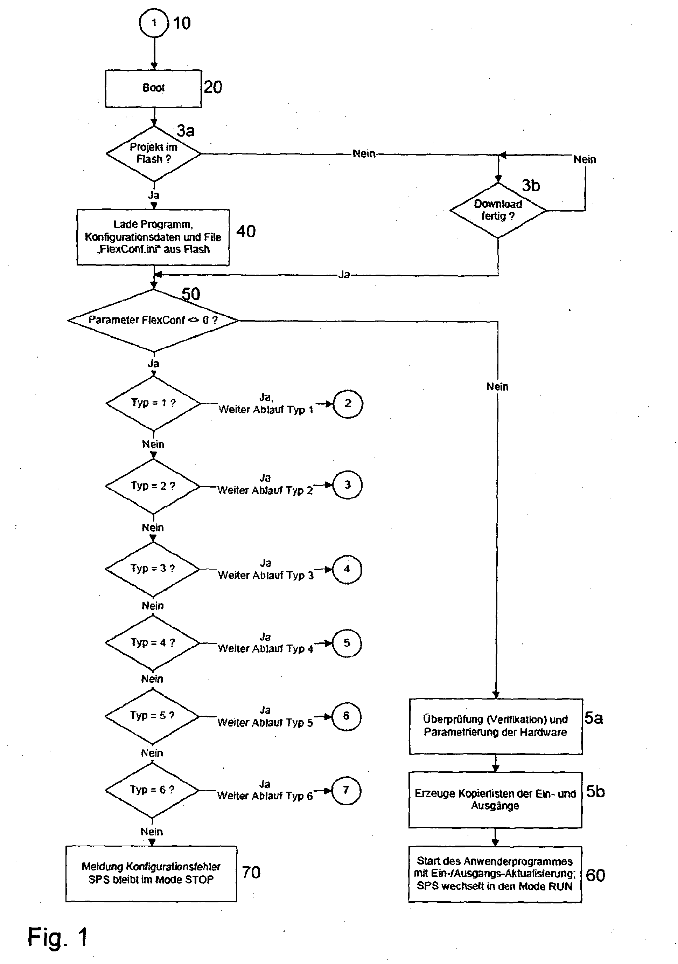

**Fig. 1** zeigt einen beispielhaften Ablauf des erfindungsgemäßen Verfahrens zur Konfigurierung einer Steuerungseinrichtung in einem vorzugsweise modular aufgebautem, Steuerungs- oder Automatisierungssystem mit einer flexibel ausbaubaren Hardwarestruktur.

Bevor das Steuerungssystem einsatzfähig ist und die Ein- und Ausgänge der Hardware des Systems, welche beispielsweise Eingabeeinheiten, Ausgabeeinheiten, Ein-und/ Ausgabeeinheiten, Kommunikationskoppler und/oder Steuerungseinrichtungen umfasst, ansprechbar sind, müssen die Steuerungseinrichtung und die Ein-/Ausgabeeinheiten entsprechend den jeweiligen Anforderungen konfiguriert werden.

Erfindungsgemäß ist vorgesehen, beim Hochfahren der Steuerungseinrichtung ein Laden des Anwender- bzw. Steuerungsprogramms, der Konfigurationsdateien und der Änderungssoftware mit den darin enthaltenen Änderungsinformationen auszuführen, wobei die übertragenen Konfigurationsdaten in der Steuerungseinrichtung an die übertragenen Änderungsinformationen angepasst, Kopierlisten für Ein- und Ausgänge der im Automatisierungssystem verwendeten Hardware entsprechend den abgelegten Änderungsinformationen erstellt und eine entsprechende Parametrierung der Hardware durchgeführt werden.

Gemäß dem erfindungsgemäßen Verfahrens zur Konfigurierung der Steuerungseinrichtung werden dazu die folgenden Verfahrensschritte ausgeführt.

In einem vorbereitenden Schritt 10 wird die Steuerungseinrichtung eingeschaltet.

Im nachfolgenden Schritt 20 wird der Bootcode der SPS 1 durchlaufen und die Steuerungseinrichtung zur Abarbeitung des Steuerungsprojektes vorbereitet.

Gemäß der in **Fig.** 1 dargestellten Verzweigung 3a wird nun überprüft, ob im spannungsausfallsicheren Speicher der SPS 1 ein Steuerungsprojekt abgelegt ist.

Ist kein Steuerungsprojekt vorhanden, so wird der Verfahrensablauf solange unterbrochen (siehe Verzweigung 3b), bis das Steuerungsprojekt über ein angeschlossenes Programmierwerkzeug, auch Engineering- Tool genannt, beispielsweise über den von der Firma ABB verwendeten Control Builder, welches beispielsweise mittels einer seriellen Datenübertragung über das Bussystem des Automatisierungssystems oder über ein im Automatisierungssystem vorhandenes Netzwerk, wie z.B. Ethernet- oder ARCNET mit der daran angeschlossenen SPS 1 kommuniziert, in die SPS 1 geladen wurde.

Die im Projekt abgelegte Steuerungskonfiguration umfasst nunmehr den maximal möglichen Hardwareausbau des Automatisierungssystems und die Einstellung der Systemparameter, wobei beispielsweise Informationen über Ein-/Ausgangs-Adressen der Hardware des Systems gespeichert sind.

In einem nächsten Schritt 40 werden die im Speicher der Steuerungseinrichtung abgelegten Konfigurationsdateien, das Steuerungs- bzw. Anwenderprogramm sowie ein File "FlexConf.ini", welches die Änderungssoftware für die Änderungsinformationen beinhaltet, aus dem spannungsausfallsicherem Speicher in die Zentraleinheit (CPU) der Steuerungseinrichtung geladen. Damit liegt nunmehr das Projekt mit der Änderungssoftware File "FlexConf.ini" in der CPU der Steuerungseinrichtung ab. Dabei enthält das File "FlexConf.ini" die zuvor erfassten Modifikationen der vorgesehenen Hardwaregeräte.

Im folgenden Schritt 50 wird eine Überprüfung dahingehend durchgeführt, ob die Steuerungseinrichtung auf den Modus "Steuerung mit flexibler Konfiguration" und im Parameter "FlexControl" ein Übertragungstyp zum Laden der Hardwareänderungen gegenüber einem maximal möglichen Hardwareausbau des Automatisierungssystems eingestellt ist. Ist der Parameter "FlexControl" nicht auf "Steuerung mit flexibler Konfiguration" eingestellt, wird in einem folgenden Schritt 5a die Überprüfung (Verifizierung) und Parametrierung der Hardware durchgeführt und in einem Schritt 5b werden die Ein-/Ausgabeeinheiten entsprechend der Steuerungskonfiguration, wie aus dem Stand der Technik bekannt, parametriert. Ist eine Übereinstimmung der im System verwendete Hardware mit der projektierten Hardware in der Steuerungskonfiguration vorhanden, wird das Steuerungs- bzw. Anwenderprogramm der SPS 1 in einem abschließenden Schritt 60 gestartet, die Ein- und Ausgangsdaten der Hardware des Automatisierungssystems werden aktualisiert und die SPS 1 wechselt in den Modus "RUN".

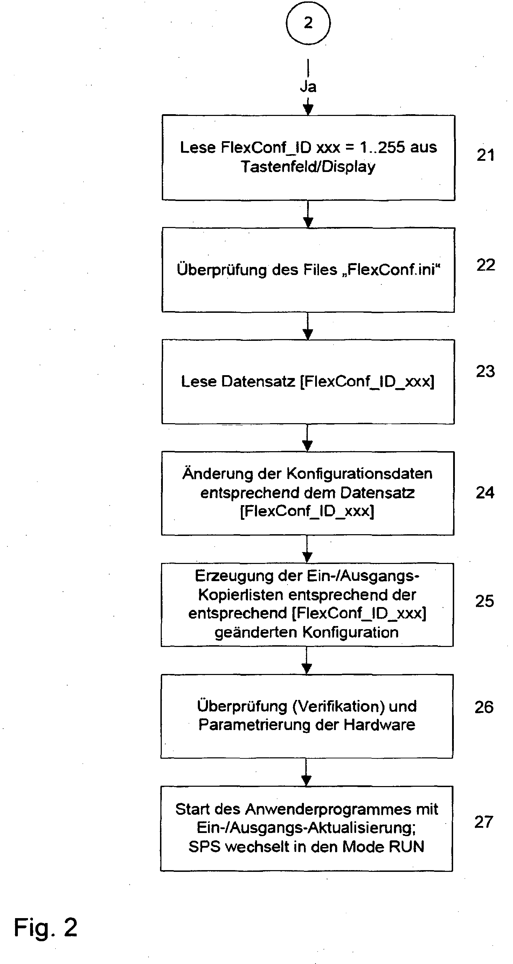

Beispielhaft sind in den **Fig.** 2 bis 7 die Parameter "FlexControl" einstellbaren Übertragungstypen zum Laden der Hardwareänderungen gegenüber einem maximal möglichen Hardwareausbaus des Automatisierungssystems, nachfolgend als Änderungsinformationen bezeichnet, beschrieben.

Ist die Steuerungseinrichtung auf den Modus "Steuerung mit flexibler Konfiguration" eingestellt, werden erfindungsgemäß entsprechend dem zuvor ausgewählten Übertragungstyp Typ = 1, Typ = 2, Typ = 3, Typ = 4, Typ = 5, Typ = 6 die Änderungsinformationen im File FlexConf.ini zur Steuerungseinheit übertragen.

Ist die Steuerungseinrichtung auf den Modus "Steuerung mit flexibler Konfiguration" eingestellt, werden erfindungsgemäß entsprechend dem zuvor ausgewählten Übertragungstyp Typ = 1, Typ = 2, Typ = 3, Typ = 4, Typ = 5, Typ = 6 die Änderungsinformationen im File FlexConf.ini zur Steuerungseinheit übertragen.

In einer vorteilhaften Ausgestaltung des erfindungsgemäßen Verfahrens ist vorgesehen, dass bei einer fehlenden Auswahl eines der Übertragungstypen Typ = 1, Typ = 2, Typ = 3, Typ = 4, Typ = 5, Typ = 6, die in den Fig. 2 bis 7 beschrieben sind, automatisch eine Fehlermeldung "Konfigurationsfehler" erzeugt und/oder angezeigt wird und die Steuerungseinrichtung im der Betriebsart "STOP" bleibt.

In den **Fig.** 2 bis 7 sind die Übertragung der Änderungsinformationen gemäß dem im Parameter "FlexControl" eingestellten Übertragungstypen Typ = 1, Typ = 2, Typ = 3, Typ = 4, Typ = 5, Typ = 6 jeweils ausgehend von den Verbindungsstellen 2, 3, 4, 5, 6 und 7 dargestellt und beschrieben.

**Fig.** 2 zeigt einen beispielhaften Ablauf des erfindungsgemäßen Verfahrens, wobei die Übertragung der Änderungsinformationen gemäß einem Übertragungstyps Typ = 1 ausgeführt wird.

Ausgehend von der Verbindungsstelle 2 in Fig. 1 werden die Änderungsinformationen "FlexConf.ini" im Flash- Speicher der SPS 1 abgelegt. Die Datensatznummer FlexConf_ID 1..255 wird dazu aus dem Display/Tastenfeld der SPS 1 gelesen. Ist im Tastenfeld beispielsweise die FlexConf_ID auf 10 eingestellt, so wird der Datensatz [FlexConf_ID_10] aus dem File "FlexConf.ini" zum Ermitteln der Änderungen an der Steuerungskonfiguration herangezogen.

In einem nachfolgenden Schritt 22 erfolgt eine Überprüfung des Files "FlexConf.ini" auf syntaktische und formale Richtigkeit. Beispielsweise wird geprüft, ob der jeweilige Datensatz im abgelegten Projekt vorhanden ist.

Die im File "FlexConf.ini" abgelegten Änderungsinformationen werden in einem weiteren Schritt 23 als Datensätze [FlexConf_ID_xxx], erfasst. Dabei ist xxx beispielsweise eine Zahl zwischen 001 .. 255 und entspricht einem Wert der FlexConf_ID. Unter dem Haupteintrag [FlexConf_ID_xxx], werden so alle Änderungen der Hardware für eine Modifikation gegenüber dem maximalen Ausbau des Steuerungssystems eingetragen.

Nachdem im Schritt 23 die Änderungsinformationen als Datensätze [Flex-Conf_ID_xxx] des Files "FlexConf.ini", so erfasst wurden, dass alle Änderungen für eine Modifikation der Hardware in den Datensätzen [FlexConf_ID_xxx] eingetragen sind, werden in einem folgenden Schritt 24 werden die im Projekt abgelegten Konfigurationsdateien entsprechend der eingelesenen Datensätze [FlexConf_ID_xxx] des Files "FlexConf.ini" angepasst.

In einem Schritt 25 werden Kopierlisten für die Ein-/Ausgabedaten der Ein- und Ausgänge der verwendeten Hardware des Automatisierungssystems entsprechend der im File "FlexConf.ini" abgelegten Datensätze [FlexConf_ID_xxx], in denen die Änderungsinformationen abgelegt sind, erstellt.

Nach einer Prüfung durch die in der SPS 1 abgelegten Firmware auf vollständige Übernahme der Änderungsinformationen, beispielsweise dahingehend ob die in den Konfigurationsdateien verwendeten IEC- Adressen auch wirklich an der verwendeten Hardware existieren oder Adressenüberschneidungen vorliegen und einer Parametrierung der Hardware des Automatisierungssystems in einem vorletzten Schritt 26 wird das Anwenderprogramm der Steuereinrichtung in einem letzten Schritt 27 gestartet und die Steuerungseinrichtung in die Betriebsart "RUN" überführt.

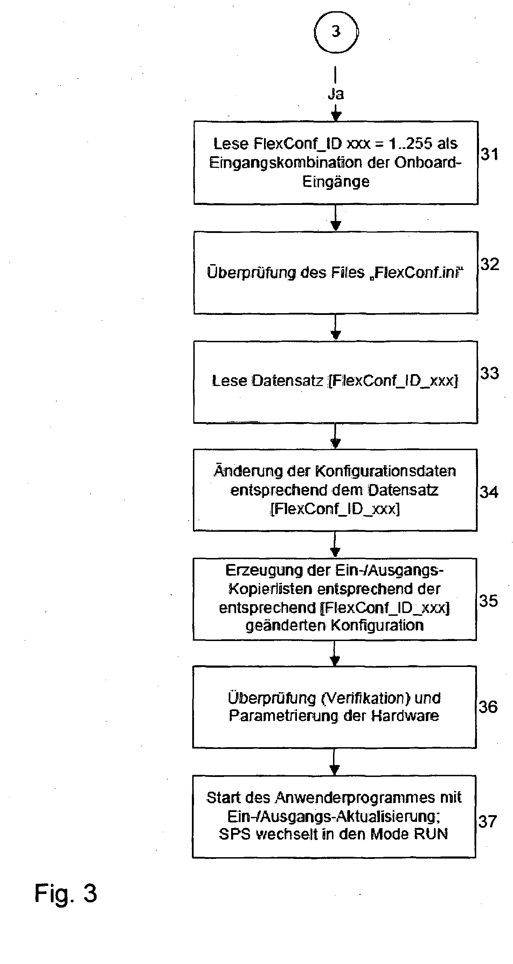

**Fig.** 3 zeigt einen beispielhaften Ablauf des erfindungsgemäßen Verfahrens, wobei die Übertragung der Änderungsinformationen gemäß einem Übertragungstyps Typ = 2 ausgeführt wird.

Ausgehend von der Verbindungsstelle 3 in **Fig.** 1 sind gemäß dem Übertragungstyp 2 die Änderungsinformationen im Flash- Speicher der SPS 1 abgelegt und werden bei der Übertragung des Steuerungsprojektes im File "FlexConf.ini" gemeinsam mit dem Projekt in die SPS 1 bereitgestellt. Die Datensatznummer FlexConf_ID wird über die Eingangskombination der Onboard- Eingänge, d.h. über direkt im Steuerungsgerät vorhandene Eingänge, bereitgestellt. Ist die Datensatznummer FlexConf_ID durch die sogenannte Eingangskombination der Onboard- Eingänge beispielsweise auf 10 eingestellt, so wird der Datensatz [Flexconf_ID_10] aus dem File "FlexConf.ini" zum Ermitteln der Änderungen an der Steuerungskonfiguration herangezogen.

In einem nachfolgendem Schritt 32 erfolgt eine Überprüfung des Files "FlexConf.ini" wie vorab in Fig. 2 beschrieben.

Die im File "FlexConf.ini" abgelegten Änderungsinformationen werden in einem weiteren Schritt 33 als Datensätze [FlexConf_ID_xxx], wie schon in **Fig.** 2 beschrieben, erfasst und als Änderungsinformationen für eine Modifikation gegenüber dem maximalen Ausbau des Steuerungssystems eingetragen.

Nachdem im Schritt 33 die Änderungsinformationen als Datensätze [Flex-Conf_ID_xxx] des Files "FlexConf.ini" erfasst wurden, werden in einem folgenden Schritt 34 die im Projekt abgelegten Konfigurationsdateien entsprechend der eingelesenen Datensätze [FlexConf_ID_xxx] des Files "FIexConf.ini" angepasst.

In einem Schritt 35 werden, wie in **Fig.** 2 beschrieben, Kopierlisten für die Ein- /Ausgabedaten der Ein- und Ausgänge der verwendeten Hardware des Automatisierungssystems entsprechend der im File "FlexConf.ini" abgelegten Datensätze [Flex-Conf_ID_xxx erstellt.

Nach einer Prüfung auf vollständige Übernahme der Änderungsinformationen in einem vorletzten Schritt 36 wird das Anwenderprogramm der Steuereinrichtung in einem letzten Schritt 37 gestartet und die Steuerungseinrichtung in die Betriebsart "RUN" überführt.

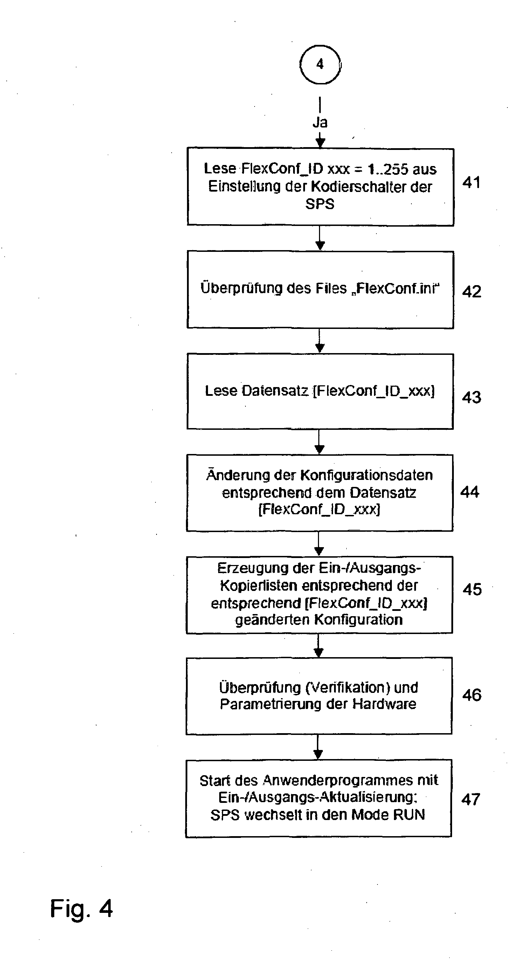

**Fig.** 4 zeigt einen beispielhaften Ablauf des erfindungsgemäßen Verfahrens, wobei die Übertragung der Änderungsinformationen gemäß einem Übertragungstyps Typ = 3 ausgeführt wird.

Ausgehend von der Verbindungsstelle 4 in **Fig.** 1 sind gemäß dem Übertragungstyp 3 die Änderungsinformationen im Flash- Speicher der SPS 1 abgelegt und werden bei der Übertragung des Steuerungsprojektes im File "FlexConf.ini" gemeinsam mit dem Projekt in die SPS 1 übergeben. Die Datensatznummer FlexConf_ID wird aus den Einstellungen der Kodierschalter der SPS 1 ermittelt.

In einem nachfolgendem Schritt 42 erfolgt eine Überprüfung des Files "FlexConf.ini" wie vorab in Fig. 2 beschrieben.

In einem weiteren Schritt 43 wird der Datensatz [FlexConf_ID_xxx] mit der Datensatznummer xxx = FlexConf_ID aus dem File "FlexConf.ini" gelesen. Der Datensatz enthält, wie schon in Fig. 2 beschrieben, die Änderungsinformationen für eine Modifikation gegenüber dem maximalen Ausbau des Steuerungssystems.

Danach werden in einem folgenden Schritt 44 die im Projekt abgelegten Konfigurationsdateien entsprechend dem eingelesenen Datensatz [FlexConf_ID_xxx] des Files "FlexConf.ini" angepasst und in einem Schritt 35, wie in Fig. 2 beschrieben, Kopierlisten für die Ein-/Ausgabedaten der Ein- und Ausgänge der verwendeten Hardware des Automatisierungssystems entsprechend der im File "FlexConf.ini" abgelegten Datensätze [FlexConf_ID_xxx] erstellt.

Nach einer Prüfung auf vollständige Übernahme der Änderungsinformationen in einem vorletzten Schritt 46 wird das Anwenderprogramm der Steuereinrichtung in einem letzten Schritt 47 gestartet und die Steuerungseinrichtung in die Betriebsart "RUN" überführt.

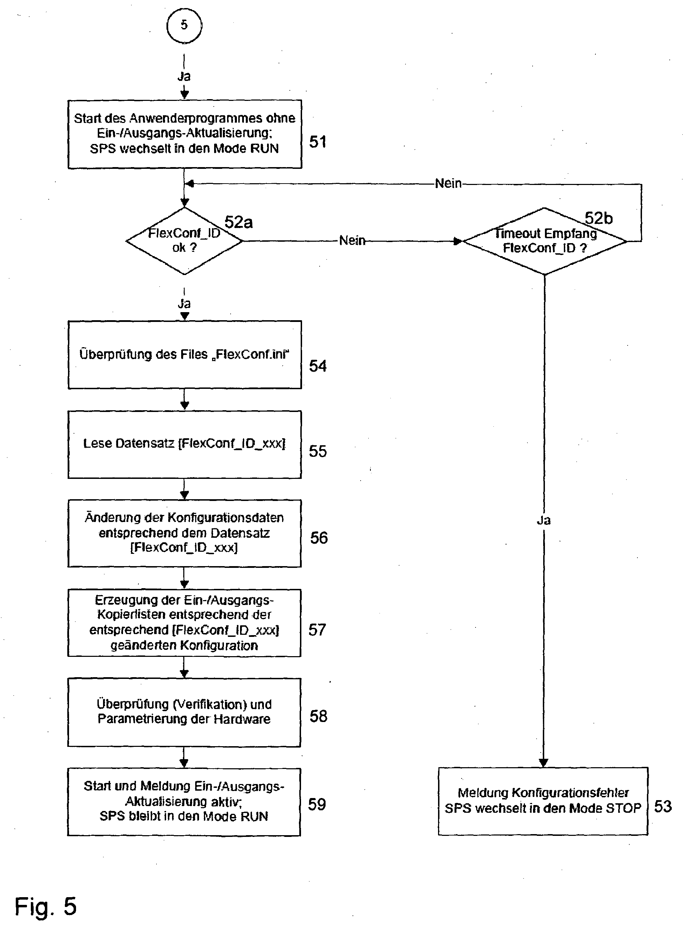

Bei den in den folgenden Fig. 5, 6 und 7 beschriebenen Übertragungstypen Typ = 4, Typ = 5, Typ = 6 wird zuerst das Anwenderprogramm in den Schritten 51, 61, 71 gestartet. Es werden aber noch keine Ein-/Ausgangsdaten ausgetauscht, da die Hardware noch nicht verifiziert und parametriert ist.

**Fig.** 5 zeigt einen beispielhaften Ablauf des erfindungsgemäßen Verfahrens, wobei die Übertragung der Änderungsinformationen gemäß einem Übertragungstyps Typ 4 = 4 ausgeführt wird. Hier wird der Übertragungstyp 4 im Parameter "FlexControl" eingestellt und die Änderungsinformationen sind im Speicher, vorzugsweise im Flash- Speicher, der SPS 1, abgelegt. Bei der Übertragung des Steuerungsprojektes, beispielsweise im File "FlexConf.ini", werden die Änderungsinformationen gemeinsam mit dem SPS-Projekt in die SPS 1 übertragen.

Ausgehend von der Verbindungsstelle 4 in **Fig.** 1 wird zuerst das Anwenderprogramm im Schritt 51 gestartet. Die Steuerungseinrichtung wechselt in die Betriebsart "RUN". Zu diesem Zeitpunkt werden noch keine Ein-/Ausgangsdaten ausgetauscht, da die Hardware des Steuerungssystems noch nicht verifiziert und parametriert ist.

Die in **Fig.** 5 dargestellte Verzweigung 52a zeigt, dass zunächst überprüft wird, ob die Übertragung der Datensatznummer "FlexConf_ID" erfolgreich innerhalb einer vorgegebenen Zeitspanne ausgeführt wurde. Ist innerhalb der vorgegebenen Zeitspanne die Übertragung der Datensatznummer "FlexConf_ID" nicht vollständig erfolgt und ist keine Aktivität bezüglich der Übertragung des Parameters "FlexConf_ID" mehr feststellbar (siehe Verzweigung 52b), spricht die mit "Timeout" bezeichnete Zeitüberwachung der Steuerungseinheit an und es wird in einem Schritt 53 die Meldung "Konfigurationsfehler" ausgegeben und die Steuerungseinrichtung wechselt in die Betriebsart "STOP".

Wurde die Datensatznummer "FlexConf_ID" erfolgreich innerhalb einer vorgegebenen Zeitspanne übertragen (Verzweigung 52a), wird in einem nächsten Schritt 54 eine Überprüfung des Files "FlexConf.ini" auf syntaktische und formale Richtigkeit gemäß Schritt 22 in Fig. 2 ausgeführt.

In einem weiteren Schritt 55 wird der Datensatz [FlexConf_ID_xxx] mit der Datensatznummer xxx = FlexConf_ID aus dem File "FlexConf.ini" gelesen. Der Datensatze enthält, wie schon in **Fig.** 2 beschrieben, die Änderungsinformationen für eine Modifikation gegenüber dem maximalen Ausbau des Steuerungssystems eingetragen.

Nachdem im Schritt 55 die Änderungsinformationen als Datensatz [FlexConf_ID_xxx] aus dem File "FlexConf.ini" gelesen wurden, werden in einem folgenden Schritt 56 die im Projekt abgelegten Konfigurationsdateien entsprechend dem eingelesenen Datensatz [FlexConf_ID_xxx] des Files "FlexConf.ini" angepasst. Also erst nach dem Empfang der Datensatznummer FlexConf_ID im Anwenderprogramm wird die Hardware entsprechend den Änderungen verifiziert und parametriert sowie die Kopierlisten für die Ein-/Ausgangsdaten erstellt und der Ein-/Ausgangs-Datenaustausch gestartet.

Dies ist in einem Schritt 57 dargestellt und wird wie in **Fig.** 2 beschrieben, dahingehend ausgeführt, dass Kopierlisten für die Ein-/Ausgabedaten der Ein- und Ausgänge der verwendeten Hardware des Automatisierungssystems entsprechend der im File "FlexConf.ini" abgelegten Datensätze [FlexConf_ID_xxx] erstellt werden.

Erst nach einem Empfang der Änderungsinformationen oder Änderungsdaten und nach einer Prüfung auf vollständige Übernahme der Änderungsinformationen in einem vorletzten Schritt 58 wird in einem letzten Schritt 59 der Austausch der Eingangs- und Ausgangdaten entsprechend den vorgegebenen Änderungsinformationen bei laufendem Anwenderprogramm aktiviert und die Steuerungseinrichtung bleibt in der Betriebsart "RUN".

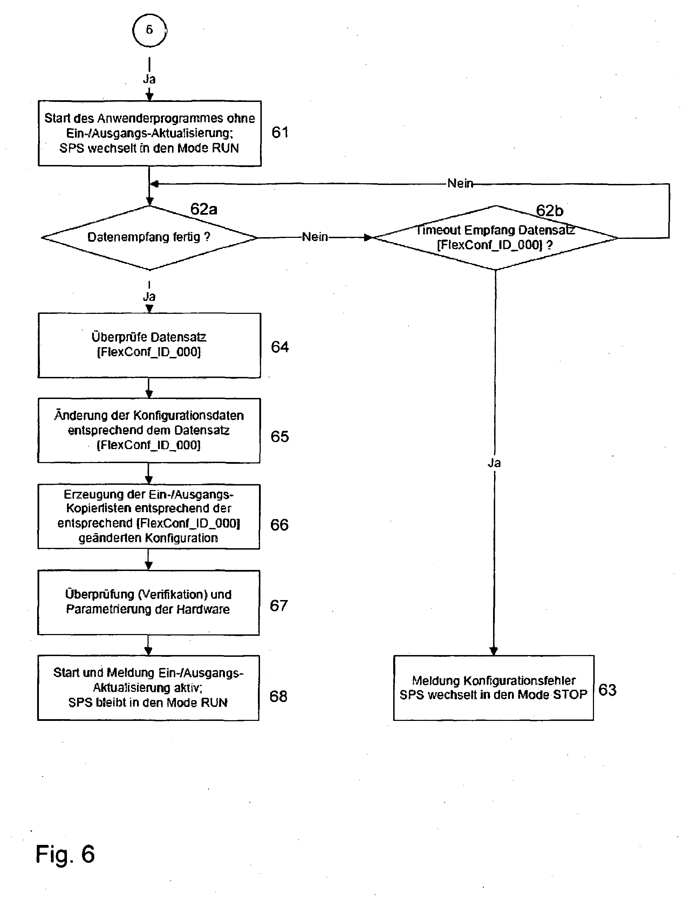

**Fig.** 6 zeigt einen beispielhaften Ablauf des erfindungsgemäßen Verfahrens, wobei die Übertragung der Änderungsinformationen gemäß einem Übertragungstyps Typ = 5 ausgeführt wird.

Ausgehend von der Verbindungsstelle 6 in **Fig.** 1 wird zuerst das Anwenderprogramm im Schritt 61 gestartet. Die Steuerungseinrichtung wechselt in die Betriebsart "RUN". Zu diesem Zeitpunkt werden noch keine Ein-/Ausgangsdaten ausgetauscht, da die Hardware des Steuerungssystems noch nicht verifiziert und parametriert ist.

Gemäß dem Übertragungstypen 5 werden nunmehr alle Änderungen der Hardware gegenüber dem maximal möglichen Ausbau des Automatisierungssystems, bzw. eine Modifikation der verwendeten Hardware unter einem Haupteintrag, beispielsweise [FlexConf_ID_000] als Datensatz direkt an die SPS 1 übertragen.

Die in **Fig.** 6 dargestellte Verzweigung 62a zeigt, dass zunächst überprüft wird, ob die Übertragung der Änderungsinformationen erfolgreich innerhalb einer vorgegebenen Zeitspanne ausgeführt wurde. Ist innerhalb der vorgegebenen Zeitspanne die Übertragung des Datensatzes bzw. des Haupteintrages [FlexConf_ID_000] nicht vollständig erfolgt und ist keine Aktivität bezüglich der Übertragung mehr feststellbar (siehe Verzweigung 62b), spricht die mit "Timeout" bezeichnete Zeitüberwachung der Steuerungseinheit an und es wird in einem Schritt 63 die Meldung "Konfigurationsfehler" ausgegeben und die Steuerungseinrichtung wechselt in die Betriebsart "STOP".

Nach einem vollständigem Empfang der Änderungsinformationen innerhalb einer vorgegebenen Zeitspanne (siehe Verzweigung 62a) wird in einem nächsten Schritt 64 eine Überprüfung des Datensatzes [FlexConf_ID_000] auf syntaktische und formale Richtigkeit ausgeführt.

Nachdem die Änderungsinformationen, betreffend beispielsweise die Modifikation eines Gerätetyps, als Datensatz unter dem Haupteintrag [FlexConf_ID_000] zur Laufzeit des Anwenderprogramms im Run- Modus direkt an die SPS 1, beispielsweise mittels einer seriellen Datenübertragung über das Bussystem des Automatisierungssystems oder über ein im Automatisierungssystem vorhandenes Netzwerk, wie beispielsweise Ethernet oder ARCNET, vollständig übertragen wurden, werden in einem folgenden Schritt 65 die im Projekt abgelegten Konfigurationsdateien entsprechend dem eingelesen Datensatz [FlexConf_ID_000] angepasst. In einem weiteren Schritt 66 werden Ein-/ Ausgangskopierlisten entsprechend dem Datensatz [Flex-Conf_ID_000] mit den Änderungsinformation für die Ein-/Ausgangsdaten erstellt.

In einem nächsten Schritt 67 wird die Hardware entsprechend den Änderungsinformationen Schritt 67 verifiziert und parametriert.

Danach wird in einem letzten Schritt 68 der Austausch der Eingangs- und Ausgangdaten entsprechend den vorgegebenen Änderungsinformationen gestartet und die Steuerungseinrichtung bleibt in der Betriebsart "RUN".

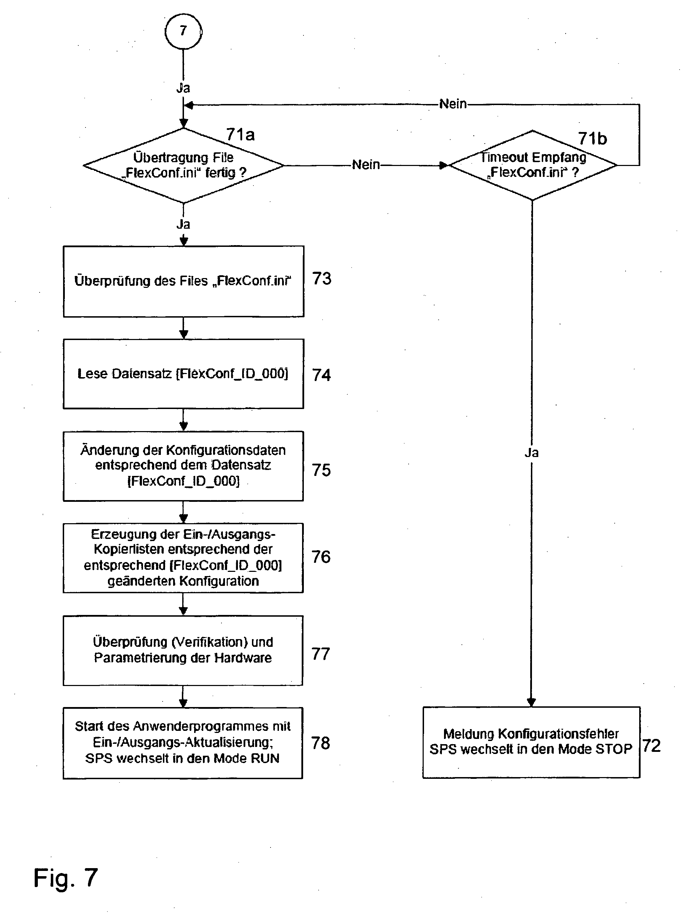

**Fig.** 7 zeigt einen beispielhaften Ablauf des erfindungsgemäßen Verfahrens, wobei die Übertragung der Änderungsinformationen gemäß einem Übertragungstyps Typ = 6 ausgeführt wird.

Ausgehend von der Verbindungsstelle 7 in **Fig.** 1 werden nach dem Start des Anwenderprogramms in einem ersten Schritt 71 das File "FlexConf.ini" mit den Änderungsinformationen per Netzwerkprotokoll, beispielsweise FTP, an die Steuerungseinrichtung übertragen bzw. eingelesen. Zu diesem Zeitpunkt werden noch keine Ein-/Ausgangsdaten ausgetauscht, da die Hardware des Steuerungssystems noch nicht verifiziert und parametriert ist.

Die in **Fig.** 7 dargestellten Verzweigung 71 a zeigt, dass zunächst überprüft wird, ob die Übertragung des Files "FlexConf.ini" erfolgreich innerhalb einer vorgegebenen Zeitspanne ausgeführt wurde. Ist innerhalb der vorgegebenen Zeitspanne keine Aktivität bezüglich der Übertragung des Files "FlexConf.ini" mehr feststellbar (siehe Verzweigung 71 b), spricht die mit "Timeout" bezeichnete Zeitüberwachung der Steuerungseinheit an und es wird in einem Schritt 72 die Meldung "Konfigurationsfehler" ausgegeben und die Steuerungseinrichtung wechselt in die Betriebsart "STOP".

Nach einer vollständigen Übertragung des Files "FlexConf.ini" mit dem Änderungsinformationen innerhalb einer vorgegebenen Zeitspanne (siehe Verzweigung 71a) wird in einem nächsten Schritt 73 wiederum eine Überprüfung des Files "FlexConf.ini" auf syntaktische und formale Richtigkeit ausgeführt.

Im folgenden Schritt 74 werden die Änderungsinformationen, also eine Modifikation der verwendeten Hardware unter einem Haupteintrag, beispielsweise [Flex-Conf_ID_000] direkt in die Steuerungseinrichtung eingelesen.

Erst nach der Änderung der Konfigurationsdaten in Abhängigkeit von den Änderungsinformationen [FlexConf_ID_000] in einem nächsten Schritt 75 werden in einem weiteren Schritt 76 Kopierlisten für die Ein-/Ausgangsdaten entsprechend der geänderten Konfiguration erzeugt.

In einem folgendem Schritt 77 wird die Hardware entsprechend der Änderungsinformationen verifiziert und parametriert. Dazu sind im Anwenderprogramm der SPS 1spezielle Funktionsbausteine für die Verifikation und Parametrierung der Hardware-Konfiguration abgelegt.

Danach wird in einem letzten Schritt 78 das Anwenderprogramm mit einer Aktualisierung der Eingangs- und Ausgangdaten entsprechend den vorgegebenen Änderungsinformationen gestartet und die Steuerungseinrichtung wechselt in die Betriebsart "RUN".

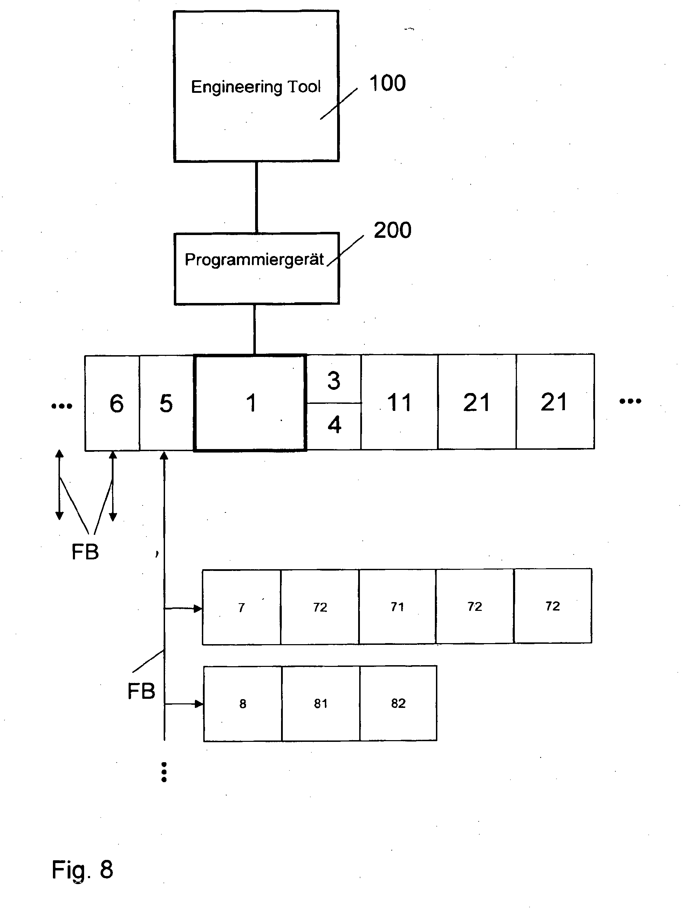

Fig. 8 zeigt ein Beispiel für ein modular aufgebautes Steuerungs- oder Automatisierungssystem zur Ausführung des erfindungsgemäßen Verfahrens mit einer Steuerungseinrichtung 1, die für die Steuerung von Prozessen und/oder Anlagenkomponenten vorgesehen ist, mit daran angeschlossenen Modulen der zentralen Eingabe-/ Ausgabeeinheiten 11, 21, die über einen internen Ein- /Ausgabebus mit der ersten Steuereinheit verbunden sind, und optional mit Kommunikationskopplern 5, 6, welche die Kommunikation über einen Feldbus FB mit einer Vielzahl von dezentralen Feldbus-Slaves 7, 8 und an denen angeschlossenen Eingabe-/Ausgabeeinheiten 71, 72, 81, 82 steuern. Die vorab genanten Komponenten werden nachfolgend auch als Hardware 5, 6, 7, 8, 11, 21, 71, 72, 81, 82 bezeichnet.

Die erste Steuereinheit 1 bildet einer Spannungsversorgungseinheit 3 und einer Anzeige- und/oder Bedieneinheit 4 ein Modul für die Zentraleinheit des Steuerungssystems.

Zur Konfigurierung der Steuerungseinrichtung 1 ist diese mittels eines speziellen Parameters, nachfolgend auch "FlexControl" genannt, auf den Modus "Steuerung mit einer flexibler Konfiguration" mittels der Bedieneinheit 4 eingestellt und im Parameter ist ein Typ vorgegeben, welcher festlegt wie die Übertragung der Hardwareänderung gegenüber einem maximal möglichen Hardwareausbaus des Automatisierungssystems, nachfolgend als Änderungsinformationen bezeichnet, in die Steuereinrichtung 1 auszuführen ist.

Die Steuerungseinrichtung 1 wirkt mit einem Programmierwerkzeug 100 zusammen, in dem ein Steuerungsprojekt des Automatisierungssystems mit dem maximal möglichen Hardwareausbau des Automatisierungssystems mit einer entsprechenden Parametrierung, abgelegt ist und zur Steuerungseinrichtung des Automatisierungssystems übertragen und dort im Speicher der Steuereinrichtung abgelegt ist.

Das Programmierwerkzeug 100 ist weiterhin dafür vorgesehen, die Änderungen der im Automatisierungssystem verwendeten Hardware 5, 6, 7, 8, 11, 21, 71, 72, 81, 82 gegenüber dem maximal möglichen im Projekt abgelegten Hardwareausbau, zu erfassen und der Steuerungseinrichtung 1 durch Laden eines Anwender- bzw. Steuerungsprogramms, von Konfigurationsdateien und der Änderungssoftware mit den darin enthaltenen Änderungsinformationen seriell oder über ein mit der Steuerungseinrichtung 1 verbundenes Netzwerk zu übertragen.

Nach einer Anpassung der Konfigurationsdaten an die übertragenen Änderungsinformationen erfolgt eine Erstellung von Kopierlisten für Ein- und Ausgänge der verwendeten Hardware 5, 6, 7, 8, 11, 21, 71, 72, 81, 82 entsprechend den abgelegten Änderungsinformationen, eine Prüfung auf vollständige Übernahme der Änderungsinformationen in die Konfigurationsdateien, eine Parametrierung der Hardware 5, 6, 7, 8, 11, 21, 71, 72, 81, 82 und der Start des Anwenderprogramms der Steuerungseinrichtung sowie eine Überführung der Steuerungseinrichtung in die Betriebsart "RUN".

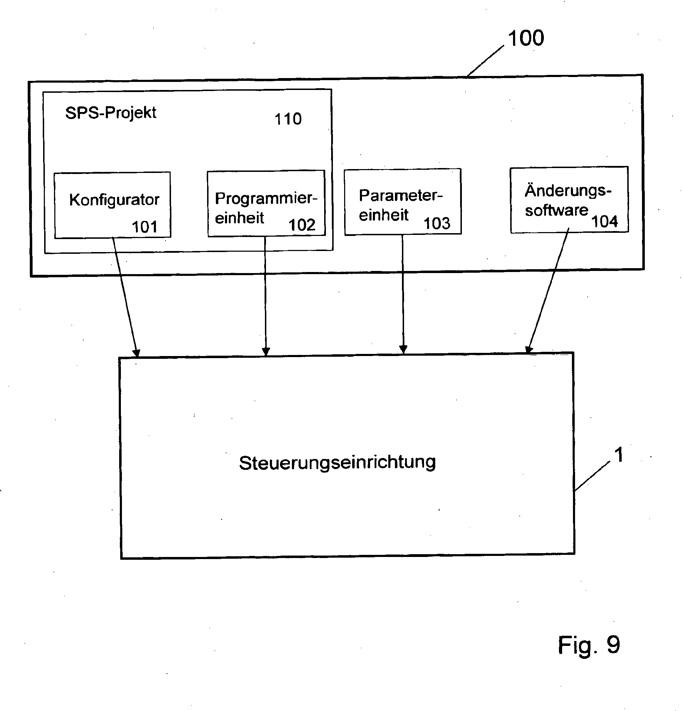

**Fig.** 9 zeigt ein beispielhaft ausgebildetes System zur Ausführung des erfindungsgemäßen Verfahrens mit einer Steuerungseinrichtung 1 und einem daran angeschlossenen Programmierwerkzeug 100, wobei vom Programmierwerkzeug 100 ein Anwender- bzw. Steuerungsprogramm mit einer entsprechenden Parametrierung, Konfigurationsdateien und eine Änderungssoftware 104 mit den darin enthaltenen Änderungsinformationen über eine serielle Schnittstelle oder über ein mit der Steuerungseinrichtung 1 verbundenes Netzwerk in die Steuereinrichtung 1 übertragbar sind.

Im Programmierwerkzeug 100 ist ein Steuerungsprojekt 110 abgelegt, welches die Hardware des Automatisierungssystems als Bestandteil eines Steuerungsprojektes 110 abbildet. Dazu ist im Steuerungsprojekt 110 mittels eines erstes Softwaremoduls 101, auch Konfigurator genannt, eine maximal mögliche Ausbaustufe der im Automatisierungssystem vorgesehenen Hardwaregeräte mit einer entsprechenden Parametrierung abgelegt, die zur Steuerungseinrichtung des Automatisierungssystems übertragen und dort im Speicher der Steuereinrichtung abgelegt wird. Weiterhin umfasst das Steuerungsprojekt 110 ein zweites Softwaremodul 102, auch Programmiereinheit genannt, in dem eine Verknüpfung der vorgesehenen Hardwaregeräte des Automatisierungssystems untereinander programmiert ist.

Das Programmierwerkzeug 100 umfasst ein dritten Softwaremodul, welches dafür vorgesehen ist, Modifikationen der vorgesehenen Hardwaregeräte, beispielsweise Änderungen der Anzahl und/oder des Typs der verwendeten Hardwaregeräte gegenüber dem maximal möglichen Ausbau der Hardwaregeräte des Automatisierungssystems, die im Steuerungsprojekt 110 abgelegt sind, mittels der Änderungssoftware 104 "FlexConf.ini" zu erfassen. Die Änderungen betreffend der verwendeten Hardwaregeräte gegenüber dem maximal möglichen Ausbau der Hardwaregeräte werden nachfolgend auch als Änderungsinformationen bezeichnet.

Desweiteren ist im Programmierwerkzeug 100 eine Parametereinheit 103 zur Einstellung der an das Programmierwerkzeug 100 anschließbaren Steuerungseinrichtung 1 auf den Modus" Steuerung mit flexibler Konfiguration" mittels eines Parameters "FlexControl vorgesehen. Im Parameter "FlexControl" ist ein Typ zur Übertragung von Änderungen in der Hardwarestruktur gegenüber dem maximal möglichen Hardwareausbau des Automatisierungssystems festlegbar.

Erfindungsgemäß ist vom Programmierwerkzeug 100 direkt oder über das Bussystem des Automatisierungssystems eine Übertragung der Änderungssoftware 104 bzw. der Datensatznummer FlexConf_ID mit den darin abgelegten Änderungsinformationen gemäß dem zuvor im Parameter "FlexControl" eingestellten Übertragungstyp zur Steuerungseinrichtung 1 durch Laden des Anwender- bzw. Steuerungsprogramms, der Konfigurationsdateien und der Änderungssoftware 104 mit den darin enthaltenen Änderungsinformationen ausführbar, wobei die übertragenen Konfigurationsdaten in die Steuerungseinrichtung an die übertragenen Änderungsinformationen angepasst, Kopierlisten für Ein- und Ausgänge der verwendeten Hardware entsprechend den abgelegten Änderungsinformationen erstellt, eine Prüfung auf vollständige Übernahme der Änderungsinformationen in die Konfigurationsdateien und eine Parametrierung der Hardware durchgeführt werden sowie nach dem Start des Anwenderprogramms die Steuerungseinrichtung (1) in die Betriebsart "RUN" überführt wird.

## Patentansprüche

1. Verfahren zur Konfigurierung einer Steuerungseinrichtung (1) in einem Automatisierungssystem mit einer flexibel ausbaubaren Hardwarestruktur, umfassend ein Programmierwerkzeuges (100), welches an die Steuerungseinrichtung (1) angeschlossen wird und ein Anwender- bzw. Steuerungsprogramm und Konfigurationsdateien überträgt, im Programmierwerkzeug (100) dazu ein Steuerungsprojekt (110) mit den vorgesehenen Hardwaregeräten des Automatisierungssystems als Bestandteil des Steuerungsprojektes (110) und eine Verknüpfung der vorgesehenen Hardwaregeräte des Automatisierungssystems untereinander abgebildet wird, umfassend folgende automatisch ausführbare Verfahrensschritte:
- im Programmierwerkzeug (100) werden Modifikationen der vorgesehenen Hardwaregeräte, also Änderungen der im Automatisierungssystem verwendeten Hardware gegenüber dem maximal möglichen im Projekt abgelegten Hardwareausbau, mittels einer Änderungssoftware (104) "FlexConf.ini", die Bestandteil des Steuerungsprojektes (110) ist, als Änderungsinformationen erfasst und mittels einer Parametereinheit (103) wird eine Einstellung der an das Programmierwerkzeug (100) anschließbaren Steuerungseinrichtung (1) auf den Modus "Steuerung mit flexibler Konfiguration" mittels eines Parameters "FlexControl" ausgeführt,
- im Parameter "FlexControl" wird ein Typ zur Übertragung der Änderungsinformationen gegenüber einem maximal möglichen Hardwareausbau des Automatisierungssystems festgelegt,
- vom Programmierwerkzeug (100) wird eine Übertragung der Änderungssoftware (104) mit den darin abgelegten Änderungsinformationen gemäß dem zuvor im Parameter "FlexControl" eingestellten Übertragungstyp zur Steuerungseinrichtung (1) und durch Laden des Anwender- bzw. Steuerungsprogramms, der Konfigurationsdateien und der Änderungssoftware (104) mit den darin enthaltenen Änderungsinformationen ausgeführt, wobei im Anwenderprogramm spezielle Funktionsbausteine zum Empfang der Änderungsinformationen, der Änderungssoftware und des Status der Hardware-Konfiguration sowie des Ein-/Ausgangs-Datenaustausches abgelegt sind, und die übertragenen Konfigurationsdaten in der Steuerungseinrichtung (1) an die übertragenen Änderungsinformationen angepasst, Kopierlisten für Ein- und Ausgänge der verwendeten Hardware entsprechend den abgelegten Änderungsinformationen erstellt und eine Parametrierung der Hardware durchgeführt werden.

2. Verfahren nach Anspruch 1, **dadurch gekennzeichnet, dass** eine Prüfung auf vollständige und/oder syntaktische und formale Richtigkeit der Übernahme der Änderungsinformationen in die Konfigurationsdateien mittels eines Prüfmoduls ausgeführt wird.

3. Verfahren nach Anspruch 1 oder 2, **dadurch gekennzeichnet, dass** im Parameter "FlexControl" ein Übertragungstyp 1 eingestellt wird und die Änderungsinformationen, die im Speicher der Steuerungseinrichtung (1) abgelegt sind, bei der Übertragung des Steuerungsprojektes (110) der Steuerungseinrichtung (1) und eine Datensatznummer FlexConf_ID zur Auswahl des Datensatzes aus dem File FlexConf.ini über gespeicherte Einstellungen aus dem Tastenfeld bzw. Display der Steuerungseinrichtung (1) bereitgestellt werden.

4. Verfahren nach Anspruch 1, **dadurch gekennzeichnet, dass** im Parameter "FlexControl" ein Übertragungstyp 2 eingestellt wird und die Änderungsinformationen, die im Speicher der Steuerungseinrichtung (1) abgelegt sind, bei der Übertragung des Steuerungsprojektes (110) der Steuerungseinrichtung (1) als File "Flex-Conf.ini" gemeinsam mit dem Projekt (110) der Steuerungseinrichtung (1) und die Datensatznummer FlexConf_ID zur Auswahl des Datensatzes aus dem File Flex-Conf.ini über eine Eingangskombination der Onboard- Eingänge bereitgestellt werden.

5. Verfahren nach Anspruch 1, **dadurch gekennzeichnet, dass** im Parameter "FlexControl" ein Übertragungstyp 3 eingestellt wird und die Änderungsinformationen, die im Speicher der Steuerungseinrichtung (1) abgelegt sind, bei der Übertragung des Steuerungsprojektes (110) als File "FlexConf.ini" gemeinsam mit dem Projekt (110) und die Datensatznummer FlexConf_ID zur Auswahl des Datensatzes aus dem File FlexConf.ini über Kodierschalter der Steuerungseinrichtung (1) bereitgestellt werden.

6. Verfahren nach Anspruch 1, **dadurch gekennzeichnet, dass** im Parameter "FlexControl" ein Übertragungstyp 4 eingestellt wird und die Änderungsinformationen, die im Speicher der Steuerungseinrichtung (1) abgelegt sind bei der Übertragung des Steuerungsprojektes (110) beispielsweise als File "FlexConf.ini" gemeinsam mit dem Projekt (110) in die Steuerungseinrichtung (1) und die Datensatznummer FlexConf_ID zur Auswahl des Datensatzes aus dem File FlexConf.ini über das in der Steuerungseinrichtung (1) abgelegten Anwenderprogramm empfangen wird.

7. Verfahren nach Anspruch 1, **dadurch gekennzeichnet, dass** im Parameter "FlexControl" ein Übertragungstyp 5 eingestellt wird und die Änderungsinformationen als Datensatz zur Laufzeit des Anwenderprogramms im sogenanntem Run- Modus an die Steuerungseinrichtung (1) übertragen werden.

8. Verfahren nach Anspruch 1, **dadurch gekennzeichnet, dass** im Parameter "FlexControl" ein Übertragungstyp 6 eingestellt wird und die Änderungsinformationen als File "FlexConf.ini" per Netzwerkprotokoll an die Steuerungseinrichtung (1) übertragen wird.

9. Verfahren nach einem der vorherigen Ansprüche, **dadurch gekennzeichnet, dass** bei einer fehlenden Auswahl eines der vorgenannten Übertragungstypen automatisch eine Fehlermeldung erzeugt und/oder angezeigt wird und die Steuerungseinrichtung (1) in der Betriebsart "STOP" verbleibt.

10. Verfahren nach einem der vorherigen Ansprüche, **dadurch gekennzeichnet, dass** das File (FlexConf.ini), welches Änderungen in der Hardwarestruktur des Steuerungssystems gegenüber einem maximal möglichen Hardwareausbaus des Automatisierungssystems beinhaltet im Windows INI-Format oder XML-Format erstellt wird.

11. Verfahren nach einem der vorherigen Ansprüche, **dadurch gekennzeichnet, dass** ein Prüfprogramm durchlaufen wird, welches die übertragenen Änderungsinformationen auf syntaktische und formale Richtigkeit überprüft.

12. Verfahren nach Anspruch 11, **dadurch gekennzeichnet, dass** bei der Prüfung auf vollständige Übernahme der Änderungsinformationen geprüft wird, ob die in den Konfigurationsdateien verwendeten IEC- Adressen auch an der verwendeten Hardware vorhanden sind und/oder Adressenüberschneidungen vorliegen.

13. Verfahren nach einem der vorherigen Ansprüche, **dadurch gekennzeichnet, dass** im Anwenderprogramm der Steuerungseinrichtung (1) Funktionsbausteine zum Empfang der Änderungsinformationen, der Änderungssoftware (104), beispielsweise als Datensatz FlexConf_ID und des Status der Hardware-Konfiguration sowie des Ein-/Ausgangs-Datenaustausches abgelegt werden.

14. System zur Konfigurierung einer Steuerungseinrichtung (1) in einem Automatisierungssystem mit einer flexibel ausbaubaren Hardwarestruktur, umfassend ein Programmierwerkzeug (100), welches an die Steuerungseinrichtung (1) anschließbar ist und mittels dem Programmierwerkzeug (100) ein Anwender- bzw. Steuerungsprogramm und Konfigurationsdateien übertragbar sind, wobei im Programmierwerkzeug (100) dazu ein Steuerungsprojekt (110) abgelegt ist, welches die vorgesehenen Hardwaregeräte des Automatisierungssystems als Bestandteil des Steuerungsprojektes (110) und eine Verknüpfung der vorgesehenen Hardwaregeräte des Automatisierungssystems untereinander abbildet, **dadurch gekennzeichnet, dass**
- im Programmierwerkzeug (100) Modifikationen der vorgesehenen Hardwaregeräte, also Änderungen der im Automatisierungssystem verwendeten Hardware gegenüber dem maximal möglichen im Projekt abgelegten Hardwareausbau, mittels einer Änderungssoftware (104) "FlexConf.ini", die Bestandteil des Steuerungsprojektes (110) ist, als Änderungsinformationen erfassbar sind und mittels einer Parametereinheit (103) eine Einstellung der an das Programmierwerkzeug (100) anschließbaren Steuerungseinrichtung (1) auf den Modus " Steuerung mit flexibler Konfiguration" mittels eines Parameters "FlexControl ausführbar ist,
- im Parameter "FlexControl" ein Typ zur Übertragung der Änderungsinformationen gegenüber einem maximal möglichen Hardwareausbau des Automatisierungssystems festgelegt ist,
- vom Programmierwerkzeug (100) eine Übertragung der Änderungssoftware (104) mit den darin abgelegten Änderungsinformationen gemäß dem zuvor im Parameter "FlexControl" eingestellten Übertragungstyp zur Steuerungseinrichtung (1) und durch Laden des Anwender- bzw. Steuerungsprogramms, der Konfigurationsdateien und der Änderungssoftware (104) mit den darin enthaltenen Änderungsinformationen ausführbar ist, wobei im Anwenderprogramm spezielle Funktionsbausteine zum Empfang der Änderungsinformationen, der Änderungssoftware und des Status der Hardware-Konfiguration sowie des Ein-/Ausgangs-Datenaustausches abgelegt sind, und eine Anpassung der übertragenen Konfigurationsdaten an die übertragenen Änderungsinformationen, eine Erstellung von Kopierlisten für Ein- und Ausgänge der verwendeten Hardwaregeräte entsprechend den abgelegten Änderungsinformationen, eine Parametrierung der Hardware und eine Überführung der Steuerungseinrichtung (1) in die Betriebsart "RUN" erfolgt.

15. System nach Anspruch 14, **dadurch gekennzeichnet, dass** eine Prüfung auf vollständige Übernahme der Änderungsinformationen in die Konfigurationsdateien mittels eines Prüfmoduls vorgesehen ist.

16. System nach Anspruch 15, **dadurch gekennzeichnet, dass** die Hardware des Automatisierungssystems Eingabeeinheiten, Ausgabeeinheiten, Ein- und/ Ausgabeeinheiten, Kommunikationskoppler und/oder Steuerungseinrichtungen (1) umfasst.

17. Verwendung des Verfahrens und des Systems nach einem der vorherigen Ansprüche in der Prozessautomation oder Maschinensteuerung zum Steuern von Prozessen und/oder Anlagenkomponenten.

## Claims

1. Method for configuring a control device (1) in an automation system having a flexibly expandable hardware structure, comprising a programming tool (100), which is connected to the control device (1) and transmits a user or control program and configuration files, and in the programming tool (100) for this purpose a control project (110) with the provided hardware units of the automation system as part of the control project (110) and a combination of the provided hardware units of the automation system among one another is mapped, comprising the following method steps that can be performed automatically:
- in the programming tool (100) modifications of the provided hardware units, that is to say changes in the hardware used in the automation system in relation to the maximum possible hardware expansion stored in the project, by means of a change software (104) "FlexConf.ini", which is part of the control project (110), are registered as change information and a setting of the control device (1) that can be connected to the programming tool (100) to the mode "Control with flexible configuration" by means of a parameter "FlexControl" is performed by means of a parameter unit (103),
- a type for the transmission of the change information in relation to a maximum possible hardware expansion of the automation system is defined in the parameter "FlexControl",
- the programming tool (100) performs a transmission of the change software (104) with the change information stored therein in accordance with the transmission type previously set in the parameter "FlexControl" to the control device (1) and by loading the user or control program, the configuration files and the change software (104) with the change information contained therein, wherein specific function modules for receiving the change information, the change software and the status of the hardware configuration and the input/output data exchange are stored in the user program, and the transmitted configuration data in the control device (1) are adapted to the transmitted change information, copy lists for inputs and outputs of the hardware used are created in accordance with the stored change information and a parameterization of the hardware is carried out.

2. Method according to Claim 1, **characterized in that** a test with regard to complete and/or syntactic and formal correctness of the transfer of the change information into the configuration files is performed by means of a test module.

3. Method according to Claim 1 or 2, **characterized in that** in the parameter "FlexControl" a transmission type (1) is set and the change information stored in the memory of the control device (1) is provided during the transmission of the control project (110) for the control device (1) and a data record number FlexConf_ID for selecting the data record from the file FlexConf.ini is provided by means of stored settings from the keypad or display of the control device (1).

4. Method according to Claim 1, **characterized in that** in the parameter "FlexControl" a transmission type (2) is set and the change information stored in the memory of the control device (1) is provided during the transmission of the control project (110) for the control device (1) as the file "FlexConf.ini" jointly with the project (110) for the control device (1) and the data record number FlexConf_ID for selecting the data record from the file FlexConf.ini is provided by means of an input combination of the onboard inputs.

5. Method according to Claim 1, **characterized in that** in the parameter "FlexControl" a transmission type 3 is set and the change information stored in the memory of the control device (1) is provided during the transmission of the control project (110) as the file "FlexConf.ini" jointly with the project (110) and the data record number FlexConf_ID for selecting the data record from the file FlexConf.ini is provided by means of coding switches of the control device (1).

6. Method according to Claim 1, **characterized in that** in the parameter "FlexControl" a transmission type (4) is set and the change information stored in the memory of the control device (1) is received during the transmission of the control project (110) for example as the file "FlexConf.ini" jointly with the project (110) into the control device (1) and the data record number FlexConf_ID for selecting the data record from the file FlexConf.ini is received by means of the user program stored in the control device (1).

7. Method according to Claim 1, **characterized in that** in the parameter "FlexControl" a transmission type (5) is set and the change information is transmitted as a data record concerning the run time of the user program in the so-called run mode to the control device (1).

8. Method according to Claim 1, **characterized in that** in the parameter "FlexControl" a transmission type (6) is set and the change information is transmitted as the file "FlexConf.ini" by means of a network protocol to the control device (1).

9. Method according to any of the preceding claims, **characterized in that** in the absence of selection of one of the abovementioned transmission types, an error message is automatically generated and/or displayed and the control device (1) remains in the operating mode "STOP".

10. Method according to any of the preceding claims, **characterized in that** the file (FlexConf.ini), comprising changes in the hardware structure of the control system relative to a maximum possible hardware expansion of the automation system is created in the Windows INI-Format or XML-Format.

11. Method according to any of the preceding claims, **characterized in that** a test program is run which checks the transmitted change information with regard to syntactic and formal correctness.

12. Method according to Claim 11, **characterized in that** the test with regard to complete transfer of the change information involves checking whether the IEC addresses used in the configuration files are also present at the hardware used and/or address overlaps are present.

13. Method according to any of the preceding claims, **characterized in that** functional modules for the reception of the change information, of the change software (104), for example as the data record FlexConf_ID and of the status of the hardware configuration and also of the input/output data exchange are stored in the user program of the control device (1).

14. System for configuring a control device (1) in an automation system having a flexibly expandable hardware structure, comprising a programming tool (100), which can be connected to the control device (1), and a user or control program and configuration files can be transmitted by means of the programming tool (100) wherein a control project (110) is stored for this purpose in the programming tool (100), said control project mapping the provided hardware units of the automation system as part of the control project (110) and a combination of the provided hardware units of the automation system among one another, **characterized in that**
- in the programming tool (100) modifications of the provided hardware units, that is to say changes in the hardware used in the automation system in relation to the maximum possible hardware expansion stored in the project, by means of a change software (104) "FlexConf.ini", which is part of the control project (110), can be registered as change information and a setting of the control device (1) that can be connected to the programming tool (100) to the mode "control with flexible configuration" by means of a parameter "FlexControl" can be performed by means of a parameter unit (103),
- a type for the transmission of the change information in relation to a maximum possible hardware expansion of the automation system is defined in the parameter "FlexControl",
- the programming tool (100) performs a transmission of the change software (104) with the change information stored therein in accordance with the transmission type previously set in the parameter "FlexControl" to the control device (1) and by loading the user or control program, the configuration files and the change software (104) with the change information contained therein, wherein specific function modules for receiving the change information, the change software and the status of the hardware configuration and the input/output data exchange are stored in the user program, and an adaptation of the transmitted configuration data to the transmitted change information, a creation of copy lists for inputs and outputs of the used hardware units in accordance with the stored change information, a parameterization of the hardware and a conversion of the control device (1) into the operating mode "RUN" are effected.

15. System according to Claim 14, **characterized in that** a test with regard to complete transfer of the change information into the configuration files by means of a test module is provided.

16. System according to Claim 15, **characterized in that** the hardware of the automation system comprises input units, output units, input and output units, communication couplers and/or control devices (1).

17. Use of the system and of the method according to any of the preceding claims in process automation or machine control for controlling processes and/or installation components.

## Revendications

1. Procédé de configuration d'un dispositif de commande (1) dans un système d'automatisation comportant une structure matérielle amovible flexible, comprenant un outil de programmation (100) qui est raccordé au dispositif de commande (1) et lui transmet un programme utilisateur ou de commande et des fichiers de configuration, un projet de commande (110) comportant les dispositifs matériels prévus du système d'automatisation en tant que partie du projet de commande (110) et une combinaison des dispositifs matériels prévus du système d'automatisation étant représentés l'un en-dessous de l'autre à cet effet dans l'outil de programmation (100), comprenant les étapes de procédé suivantes pouvant être exécutées automatiquement :
- dans l'outil de programmation (100), des modifications des dispositifs matériels prévus, et par conséquent des changements des matériels utilisés dans le système d'automatisation par rapport à la structure matérielle maximale possible stockée dans le projet, sont détectées en tant qu'informations de modification au moyen d'un logiciel de modification (104) "FlexConf.ini" qui fait partie du projet de commande (110), et au moyen d'une unité de paramétrage (103), un réglage du dispositif de commande (1) pouvant être raccordé à l'outil de programmation (100) est effectué en ce qui concerne le mode de "Commande avec configuration flexible" au moyen d'un paramètre "FlexControl",
- un type de transmission des informations de modification par rapport à une structure matérielle maximale possible du système d'automatisation est fixé dans le paramètre "FlexControl",
- une transmission au dispositif de commande (1) du logiciel de modification (104) avec les informations de modification qui y sont stockées est effectuée par l'outil de programmation (100) conformément au type de transmission préalablement réglé dans le paramètre "FlexControl" et par chargement du programme utilisateur ou de commande, des fichiers de configuration et du logiciel de modification (104) avec les informations de modification qui y sont contenues, dans lequel des composants fonctionnels spéciaux destinés à la réception des informations de modification, du logiciel de modification et de l'état de la configuration matérielle ainsi que de l'échange de données d'entrée/sortie sont stockés dans le programme utilisateur, et les données de configuration transmises sont adaptées dans le dispositif de commande (1) aux informations de modification transmises, des listes de copie destinées à des entrées et sorties des matériels utilisés sont créées en correspondance avec les informations de modification stockées et un paramétrage des matériels est effectué.

2. Procédé selon la revendication 1, **caractérisé en ce qu'**une vérification de l'exactitude complète et/ou syntaxique et formelle du transfert des informations de modification est effectuée dans les fichiers de configuration au moyen d'un module de vérification.

3. Procédé selon la revendication 1 ou 2, **caractérisé en ce qu'**un type de transmission 1 est réglé dans le paramètre "FlexControl" et **en ce que** les informations de modification qui sont stockées dans la mémoire du dispositif de commande (1) sont fournies lors de la transmission du projet de commande (110) du dispositif de commande (1), et **en ce qu'**un un numéro d'enregistrement de données FlexConf_ID permettant de sélectionner l'enregistrement de données à partir du fichier FlexConf.ini est fourni par l'intermédiaire de réglages mémorisés à partir du clavier ou de l'afficheur du dispositif de commande (1).

4. Procédé selon la revendication 1, **caractérisé en ce qu'**un type de transmission 2 est réglé dans le paramètre "FlexControl" et **en ce que** les informations de modification qui sont stockées dans la mémoire du dispositif de commande (1), sont fournies lors de la transmission du projet de commande (110) du dispositif de commande (1) sous forme de fichier "FlexConf.ini" en commun avec le projet (110) du dispositif de commande (1), et **en ce que** le numéro d'enregistrement de données FlexConf_ID destiné à sélectionner l'enregistrement de données à partir du fichier FlexConf.ini est fourni par l'intermédiaire d'une combinaison d'entrées des entrées embarquées.

5. Procédé selon la revendication 1, **caractérisé en ce qu'**un type de transmission 3 est réglé dans le paramètre "FlexControl" et **en ce que** les informations de modification qui sont stockées dans la mémoire du dispositif de commande (1), sont fournies lors de la transmission du projet de commande (110) sous forme de fichier "FlexConf.ini" en commun avec le projet (110), et **en ce que** le numéro d'enregistrement de données FlexConf_ID destiné à sélectionner l'enregistrement de données à partir du fichier FlexConf.ini est fourni par l'intermédiaire d'un commutateur de codage du dispositif de commande (1).

6. Procédé selon la revendication 1, **caractérisé en ce qu'**un type de transmission 4 est réglé dans le paramètre "FlexControl" et **en ce que** les informations de modification qui sont stockées dans la mémoire du dispositif de commande (1) sont reçues lors de la transmission du projet de commande (110) par exemple sous forme de fichier "FlexConf.ini" en commun avec le projet (110) dans le dispositif de commande (1), et **en ce que** le numéro d'enregistrement de données FlexConf_ID destiné à sélectionner l'enregistrement de données à partir du fichier FlexConf.ini est reçu par l'intermédiaire du programme utilisateur stocké dans le dispositif de commande (1).

7. Procédé selon la revendication 1, **caractérisé en ce qu'**un type de transmission 5 est réglé dans le paramètre "FlexControl" et **en ce que** les informations de modification sont transmises au dispositif de commande (1) sous forme d'enregistrement de données au moment de l'exécution du programme utilisateur dans le mode dit d'exécution.

8. Procédé selon la revendication 1, **caractérisé en ce qu'**un type de transmission 6 est réglé dans le paramètre "FlexControl" et **en ce que** les informations de modification sont transmises au dispositif de commande (1) sous forme de fichier "FlexConf.ini" conformément à un protocole de réseau.

9. Procédé selon l'une quelconque des revendications précédentes, **caractérisé en ce qu'**en cas de sélection erronée de l'un desdits type de transmission, un message d'erreur est automatiquement généré et/ou affiché et le dispositif de commande (1) reste dans le mode de fonctionnement "STOP".

10. Procédé selon l'une quelconque des revendications précédentes, **caractérisé en ce que** le fichier (FlexConf.ini) qui contient des modifications de la structure matérielle du système de commande par rapport à une structure matérielle maximale possible du système d'automatisation est réalisé en format Windows INI ou en format XML.

11. Procédé selon l'une quelconque des revendications précédentes, **caractérisé en ce qu'**on exécute un programme de vérification qui vérifie les informations de modification transmises en ce qui concerne leur exactitude syntaxique et formelle.

12. Procédé selon la revendication 11, **caractérisé en ce que**, lors de la vérification du transfert complet des informations de modification, il est vérifié si les adresses IEC utilisées dans les fichiers de configuration sont également présentes dans les matériels utilisés et/ou s'il existe des chevauchements d'adresses.

13. Procédé selon l'une quelconque des revendications précédentes, **caractérisé en ce que** des composants fonctionnels destinés à recevoir les informations de modification, le logiciel de modification (104), par exemple sous forme d'enregistrement de données FlexConf_ID, et l'état de la configuration matérielle ainsi que l'échange de données d'entrée/sortie, sont stockés dans le programme utilisateur du dispositif de commande (1).

14. Système de configuration d'un dispositif de commande (1) dans un système d'automatisation comportant une structure matérielle amovible flexible, comprenant un outil de programmation (100) qui peut être raccordé au dispositif de commande (1) et lui transmet un programme utilisateur ou de commande et des fichiers de configuration au moyen de l'outil de programmation (100), dans lequel un projet de commande (110) comportant les dispositifs matériels prévus du système d'automatisation en tant que partie du projet de commande (110) et une combinaison des dispositifs matériels prévus du système d'automatisation sont représentés l'un en-dessous de l'autre à cet effet dans l'outil de programmation (100), **caractérisé en ce que** :
- dans l'outil de programmation (100), des modifications des dispositifs matériels prévus, et par conséquent des changements des matériels utilisés dans le système d'automatisation par rapport à la structure matérielle maximale possible stockée dans le projet, peuvent être détectées en tant qu'informations de modification au moyen d'un logiciel de modification (104) "FlexConf.ini" qui fait partie du projet de commande (110) et, au moyen d'une unité de paramétrage (103), un réglage du dispositif de commande (1) pouvant être raccordé à l'outil de programmation (100) est effectué en ce qui concerne le mode de "Commande avec configuration flexible" au moyen d'un paramètre "FlexControl",
- un type de transmission des informations de modification par rapport à une structure matérielle maximale possible du système d'automatisation est fixé dans le paramètre "FlexControl",
- une transmission au dispositif de commande (1) du logiciel de modification (104) avec les informations de modification qui y sont stockées peut être effectuée par l'outil de programmation (100) conformément au type de transmission préalablement réglé dans le paramètre "FlexControl" et par chargement du programme utilisateur ou de commande, des fichiers de configuration et du logiciel de modification (104) avec les informations de modification qui y sont contenues, dans lequel des composants fonctionnels spéciaux destinés à la réception des informations de modification, du logiciel de modification et de l'état de la configuration matérielle ainsi que de l'échange de données d'entrée/sortie, sont stockés dans le programme utilisateur, et une adaptation des données de configuration transmises aux informations de modification transmises, une création de listes de copie destinées à des entrées et sorties des dispositifs matériels utilisés en correspondance avec les informations de modification stockées, un paramétrage des matériels et un basculement du dispositif de commande (1) au mode de fonctionnement "RUN" sont effectués.

15. Système selon la revendication 14, **caractérisé en ce qu'**une vérification du transfert complet des informations de modification dans les fichiers de configuration est prévue au moyen d'un module de vérification.

16. Système selon la revendication 15, **caractérisé en ce que** le matériel du système d'automatisation comprend des unités d'entrée, des unités de sortie, des unités d'entrée/sortie, des coupleurs de communication et/ou des dispositifs de commande (1).

17. Utilisation du procédé et du système selon l'une quelconque des revendications précédentes dans l'automatisation de processus ou la commande de machine outil pour commander des processus et/ou des composants d'installations.
